**Europäisches Patentamt**

**European Patent Office**

**Office européen des brevets**

(11) Veröffentlichungsnummer: **0 223 942**
**B1**

(12) # EUROPÄISCHE PATENTSCHRIFT

(45) Veröffentlichungstag der Patentschrift:
14.06.89

(51) Int. Cl.⁴: **F 16 L 47/00**

(21) Anmeldenummer: 86112299.2

(22) Anmeldetag: 05.09.86

(54) Aus Rohren bestehendes Übergangsstück in einer Transportleitung für Gas oder Flüssigkeiten.

(30) Priorität: 28.11.85 DE 3541973

(43) Veröffentlichungstag der Anmeldung:
03.06.87 Patentblatt 87/23

(45) Bekanntmachung des Hinweises auf die Patenterteilung:
14.06.89 Patentblatt 89/24

(84) Benannte Vertragsstaaten:
AT BE CH DE FR GB IT LI LU NL SE

(56) Entgegenhaltungen:
DE-A- 3 021 346
FR-A- 2 538 876
US-A- 856 682
US-A- 2 560 114
US-A- 3 524 661

(73) Patentinhaber: Jeschke, Immanuel, St.
Nicolai-Strasse 4+5, D-3203 Sarstedt OT Heisede (DE)

(72) Erfinder: Jeschke, Immanuel, St. Nicolai-Strasse 4+5,
D-3203 Sarstedt OT Heisede (DE)

(74) Vertreter: Junius, Walther, Dr., Wolfstrasse 24,
D-3000 Hannover 81 (DE)

**Beschreibung**

Die Erfindung betrifft ein aus Rohren bestehendes Übergangsstück in einer Transportleitung für Gas oder Flüssigkeiten, deren eines Rohr mit einer Muffe versehen ist, die über das Ende des anderen Rohres geschoben ist, welches an seinem Ende mit Vorsprüngen und zwischen diesen befindlichen Rillen versehen ist und die einen von außen übergeschobenen Ring trägt.

Ein derartiges Übergangsstück ist aus der DE-A-30 21 346 bekannt geworden. Es wird dort angewendet, wo von einer im Erdreich verlegten Kunststoffleitung auf eine in einem Gebäude verlegte Stahlleitung übergegangen werden muß. Dieser Übergang liegt im allgemeinen außerhalb des Gebäudes unmittelbar vor dem Gebäude im Erdreich. Das bekannte Übergangsstück stellt man so her, daß man das Ende des in der Erde verlegten Kunststoffrohres kalt oder nach Erwärmung auf einen Temperaturbereich elastischer Verformbarkeit zu einer Muffe aufweitet und unmittelbar danach auf das zwischenzeitlich in die Muffe eingeschobene Eisenrohr wieder aufschrumpfen läßt, nachdem man zuvor in die Oberfläche des Endes des Eisenrohres ringförmige Rillen in der Querschnittsform von Zähnen oder Rechtecken oder Dreiecken eingearbeitet hat. Zur Erhöhung und Sicherung der Gasdichtheit wird über die Muffe ein Ring geschoben. — Dieses Übergangsstück hat sich für kleinere Durchmesser von Gasleitungen gut bewährt. Bei Gasleitungen großen Durchmessers hingegen ist die Durchführung des Verfahrens mit Schwierigkeiten verbunden.

Es ist die Aufgabe der Erfindung, das Übergangsstück so zu gestalten, daß es auch für große Rohrdurchmesser in einfacher Weise herstellbar ist, daß dieses Übergangsstück dauerhaft gasdicht ist und daß dieses Übergangsstück wie ein Fitting herstellbar ist und an der Verbindungstelle zweier Rohre in üblicher Weise durch Schweißen, Kleben, Verschrauben oder Anflanschen verbindbar ist.

Die Erfindung besteht darin, daß die Vorsprünge auf dem Rohrende eine dem Rohrende zugewandte konische Schrägfläche, eine zur Achse parallele Fläche und daran anschließend eine senkrecht zur Achse verlaufende Fläche aufweisen, daß die Innenfläche der Muffe mit Rillen und zwischen diesen befindlichen ringförmigen Vorsprüngen versehen ist, daß diese Rillen an der Muffe die Außenkontur der Vorsprünge am Rohrende und die Vorsprünge in der Muffe die Kontur der Rillen im Metallrohrende aufweisen, daß vor dem Einschieben des Rohrendes in die Muffe der Außendurchmesser des Endes des Rohres geringfügig größer als der Innendurchmesser der Muffe ist und daß vor dem Einschieben des Rohrendes in die Muffe der zumindest an seinem einen inneren Ende mit einer Abschrägung oder Abrundung versehene Ring einen Innendurchmesser aufweist, der geringfügig kleiner als der Aussendurchmesser der Muffe ist.

Dieses Übergangsstück ist leicht herstellbar. Es ist gasdicht über lange Betriebsdauer und es ist einfach mit einer Presse zu montieren, die die Muffe über das Rohrende schiebt. Hierbei braucht die Muffe nicht erwärmt zu werden, sie verformt sich unter dem Pressendruck infolge der Schrägflächen der Vorsprünge und kehrt nach dem Aufweitungsvorgang beim Überschieben unmittelbar hinterher wieder in ihre führenden Dimensionen zurück. Durch die besondere Form der Vorsprünge und Rillen und durch eine geringfügige Verkürzung der Muffendimensionen während des Aufschiebevorganges durch das Pressen, werden die Vorsprünge in ihrer Lage etwas verschoben und auch selbst etwas deformiert, wodurch eine besonders gute Gasabdichtung zustandekommt. Diese wird dauerhaft dadurch aufrechterhalten, daß der über die Muffenaußenfläche geschobene Ring diesen Deformationszustand, bei dem Flächen von Vorsprüngen und Rillen aneinander gasdicht anliegen, langdauernd aufrechterhält. Eine zusätzliche Gasabdichtung wird mit Hilfe eines Dichtringes, vorzugsweise eines O-Ringes, Quartring, Ring mit Dichtungslippen o.ä., erzielt.

Diese Übergangsverbindung hat eine besondere Bedeutung dadurch, daß aus ungleichen, nicht direkt miteinander verbindbaren Stoffen hergestellte Rohre gasdicht miteinander verbunden werden können. Es gibt eine Reihe von bevorzugten Ausführungsformen: Eine bevorzugte Ausführungsform besteht darin, daß in der Muffe an deren der Muffenstirnseite abgewandten Ende eine Ausnehmung für die Aufnahme eines Dichtringes vorgesehen ist, und daß am Ende des eingeschobenen Rohres eine zylindrische Fläche für die Anlage des Dichtringes vorgesehen ist.

Eine andere bevorzugte Ausführungsform besteht darin, daß in der Muffe zwischen den Rillen und den Vorsprüngen einerseits und der Stirnseite der Muffe andererseits eine Ausnehmung für die Aufnahme eines Dichtringes vorgesehen ist. Eine weitere bevorzugte Ausführungsform besteht darin, daß auf dem Rohr (von der Stirnseite aus betrachtet) hinter den Rillen und Vorsprüngen eine Ausnehmung für die Aufnahme eines Dichtringes vorgesehen ist, und daß in der Muffe zwischen den Rillen und Vorsprüngen einerseits und der Stirnseite der Muffe andererseits eine zylindrische oder konische Fläche für die Anlage eines Dichtringes vorgesehen ist.

Besonders vorteilhaft ist es, wenn der über die Muffe geschobene Ring aus Polyacetal besteht.

Das Rohr wird vorzugsweise aus Metall, insbesondere Stahl, Gußeisen, Stahlguß, Buntmetallen, aber auch aus Keramik, PVC, gefertigt. Die Muffe und das anschließende Rohrstück wird aus Kunststoff, insbesondere Polyäthylen, gefertigt, welches sich für Gasrohrleitungen langjährig bewährt hat. Es ist aber auch möglich, das Rohr nicht aus Metall, sondern aus Kunststoff herzustellen. In diesem Falle wird in das Innere des Rohres unter die Rillen und Vorsprünge ein Abstützrohrstück aus Metall eingeschoben.

Von besonderer Bedeutung ist es, daß das erfindungsgemäße Übergangsstück als eine Kraftbegrenzer-Isoliertrennstelle-Kombination hergestellt werden kann. In Gasleitungen werden Kraftbegrenzer als Sollbruchstellen eingebaut, die vor Gebäuden, aber auch an anderen Stellen bei erdverlegten Leitungen angeordnet werden. Sie dienen als Sollbruchstelle, wenn z.B. bei Baggerarbeiten große Zugkräfte auf die Gastransportleitung einwirken, damit die Gasleitung innerhalb des Erdbereiches zu Bruch geht und nicht zu Gasrohrbrüchen innerhalb von Gebäuden führen kann. Denn Gasrohrbrüche innerhalb von Gebäuden können zu katastrophalen Explosionen führen. Isoliertrennstellen werden in aus Stahlrohren hergestellten erdverlegten Gastransportleitungen angeordnet, um durch unterschiedliche elektrische Potentiale hervorgerufene elektrische Ströme in den Leitungen zu vermeiden, die zu erheblichen Korrosionsschäden führen.

Erfindungsgemäß kann das Übergangsstück zu einer Isoliertrennstelle-Kraftbegrenzer-Kombination dadurch ausgebildet werden, daß das mit der Muffe versehene Rohr mindestens eine weitere Muffe aufweist, in welche ein weiteres Rohr eingeschoben ist, welches auf der Außenseite Vorsprünge aufweist, daß zwischen den Muffen ein nach innen gerichteter Vorsprung befindlich ist, daß das mit den Muffen versehene Rohr aus einem elektrisch isolierenden Material besteht und daß die an der Außenseite mit Vorsprüngen versehenen Rohre aus Metall bestehen. Dieses als Isoliertrennstelle-Kraftbegrenzer-Kombination hergestellte Übergangsstück ist einfach herstellbar. Es kann als Armatur in der Werkstatt hergestellt werden und dann in die Gastransportleitungen in herkömmlicher Weise eingebaut werden. Es kann aber auch ohne die Metallrohre als Fitting hergestellt werden und bei geeigneter Anwendung von geeigneten Preßvorrichtungen an der Baustelle dadurch montiert werden, daß die dort verlegten Rohre in die Muffen eingepreßt werden und anschließend der Ring über die Muffe geschoben wird.

Diese Kraftbegrenzer-Isoliertrennstelle-Kombination läßt sich nicht nur für gerade verlaufende Transportleitungen herstellen, sondern auch wie ein Fitting für Winkel, Bogen, T-Abzweige, Reduzierstücke und anderes mehr. Hierzu ist es vorteilhaft, wenn der Ring geteilt ist und zusammen mit anderen Ringen Teil einer anpreßbaren, mindestens zweiteiligen Schale ist.

Diese Schale kann dann vorteilhafterweise mittels Schrauben zusammengepreßt sein.

Die Kraft, die zu einem Sollbruch in diesem Übergangsstück führt, in dem in der Kunststoffmuffe die Vorsprünge herausgerissen werden, läßt sich durch die Anzahl der Vorsprünge sowie durch die Höhe der Vorsprünge bzw. Tiefe der Rillen auf fest vorgebbare Werte einstellen. Eine weitere Möglichkeit der Einstellung dieser Sollbruchkraft kann dadurch erreicht werden, daß die ringförmigen Vorsprünge durch achsparallel verlaufende Ausnehmungen von der Tiefe der Rillen unterbrochen sind.

Das Wesen der Erfindung ist nachstehend anhand eines in der Zeichnung schematisch dargestellten Ausführungsbeispieles näher erläutert. Es zeigen:

Fig. 1 das Rohr, teilweise im Schnitt,

Fig. 2 ein mit Gewinde versehenes Rohrende,

Fig. 3 ein mit Flansch versehenes Rohrende,

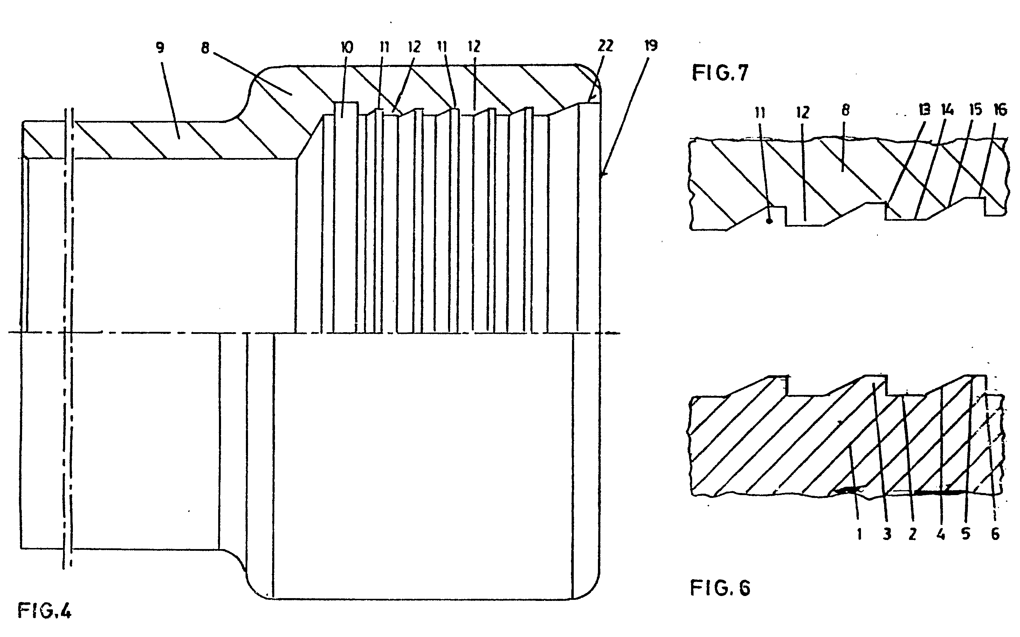

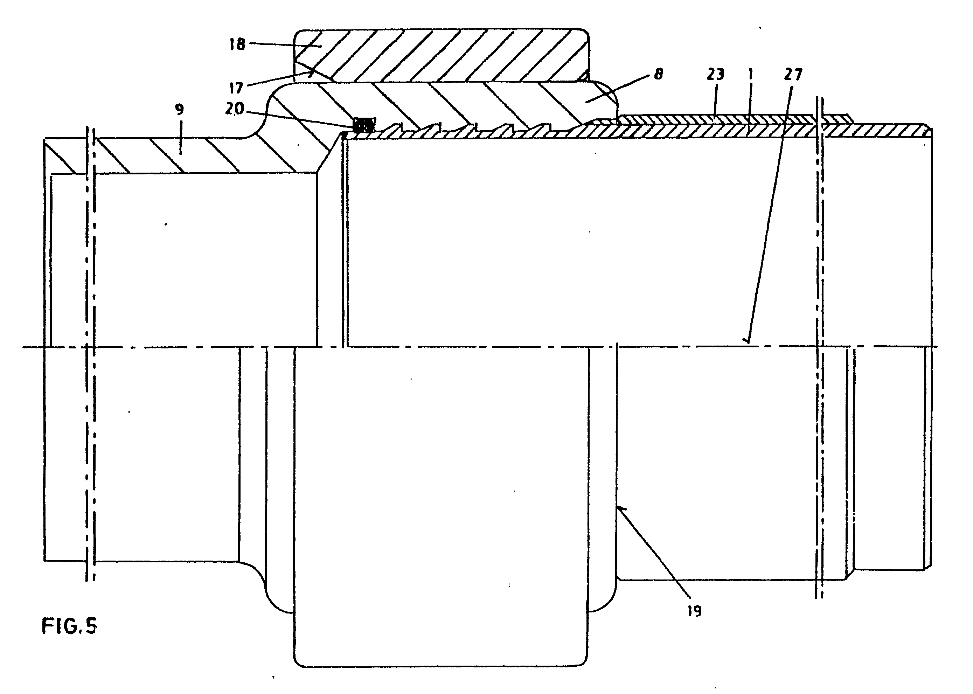

Fig. 4 die Muffe mit Kunststoffrohr, teilweise im Schnitt,

Fig. 5 Stahlrohrende und Kunststoffmuffe im zusammengeschobenen Zustand,

Fig. 6 einen Ausschnitt aus einem Querschnitt durch die Rillen und Vorsprünge des Rohrendes,

Fig. 7 einen Ausschnitt aus einem Querschnitt durch die Rillen und Vorsprünge in der Muffe,

Fig. 8 eine andere Muffe, teilweise im Schnitt,

Fig. 9 ein als Isoliertrennstelle-Kraftbegrenzer-Kombination ausgebildetes Übergangsstück, bei dem auf der einen Seite das Metallrohr bereits montiert ist, auf der anderen Seite noch nicht, teilweise im Schnitt,

Fig. 10 ein als T-Stück ausgebildetes Übergangsstück, teilweise im Schnitt,

Fig. 11 eine Seitenansicht des Übergangsstückes der Fig. 10.

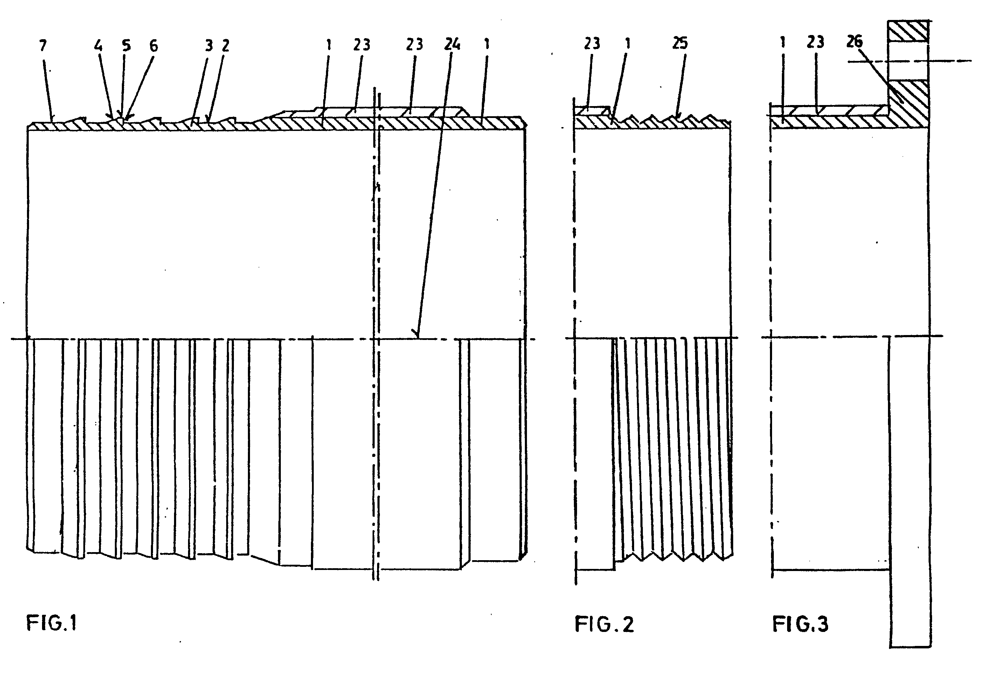

Das Rohr 1 ist aus Stahl gefertigt und trägt an seinem einen Ende Vorsprünge 3, zwischen denen sich Rillen 2 befinden. Am Ende kurz vor der Stirnseite befindet sich eine zylindrische Fläche 7, die für die Anlage eines Dichtringes 20 vorgesehen ist. Jeder Vorsprung 3 besteht aus einer der Stirnfläche des Rohres 1 zugewandten Schrägfläche 4, aus einer der Achse 24 des Rohres parallelen Fläche 5 und einer zur Achse 24 des Rohres senkrecht verlaufenden Fläche 6. Alle Vorsprünge sind ringförmig ebenso wie die Rillen 2 zwischen den Vorsprüngen 3. Das diesem mit Rillen 2 und Vorsprüngen 3 versehenen Ende gegenüberliegende Ende A des Rohres 1 kann, wie in Fig. 2 gezeigt ist, ein Gewinde 25 tragen oder, wie Fig. 3 zeigt, einen Flansch 26.

Die aus Kunststoff gefertigte Muffe 8 des Kunststoffrohres 9 weist auf der Innenseite Vorsprünge 12 und Rillen 11 auf. Auch bei diesen Vorsprüngen ist die Schrägfläche (konische Fläche) 15 der Stirnseite 19 der Muffe 8 zugewandt. An diese Schrägfläche 15 schließt sich eine achsparallele Fläche 16 an und an diese hinwiederum eine senkrecht zur Achse 27 des Kunststoffrohres verlaufende Fläche. An diese schließt sich nun als Rille eine achsparallel verlaufende Fläche 14 an, an die sich hinwiederum die nächste Schrägfläche 15 des nächsten Vorsprunges 12 anschließt. Die Kontur dieser Rillen und Vorsprünge entspricht der Kontur der Rillen und Vorsprünge auf dem Rohr 1. Im hinteren Ende der Muffe auf der den Rillen 11 und Vorsprüngen 12 abgewandten Seite, also weit entfernt von der Stirnseite 19 der Muffe, ist eine Ausnehmung 10 vorgesehen, in die ein Dichtring 20 einlegbar ist, der nach dem Einschieben des Rohres 1 in die Muffe 8 auf der zylindrischen Fläche 7 aufzuliegen kommt. Dieser Dichtring stellt eine weitere Gasdichtung dar.

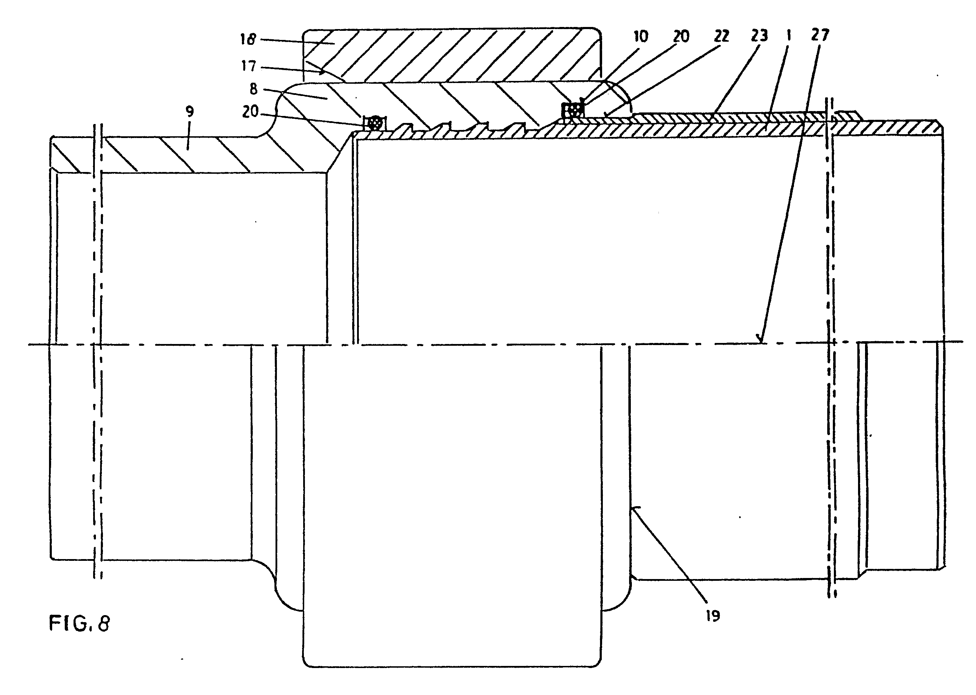

Im Ausführungsbeispiel der Fig. 8 ist unmittelbar neben der Stirnseite 19 noch vor den Rillen 11 und Vorsprüngen 12 eine weitere Ausnehmung 10 in der Fläche 22 vorgesehen, in die ein weiterer Dichtring 20 eingelegt werden kann, der sich gegen die Kunststoffummantelung 23 des Stahlrohres 1 anlegt und eine Abdichtung gegen eindringende Feuchtigkeit aus dem Erdreich darstellt.

Nach dem Einschieben bzw. Einpressen des Metallrohres 1 in die Muffe 8 wird ein Ring 18, dessen Innendurchmesser ebenso groß oder geringfügig kleiner als der Außendurchmesser der Muffe 8 ist, über die Muffe 8 in axialer Bewegung gepreßt. Hierdurch wird dem Metallrohr ein sehr fester Sitz innerhalb der Muffe 8 gegeben.

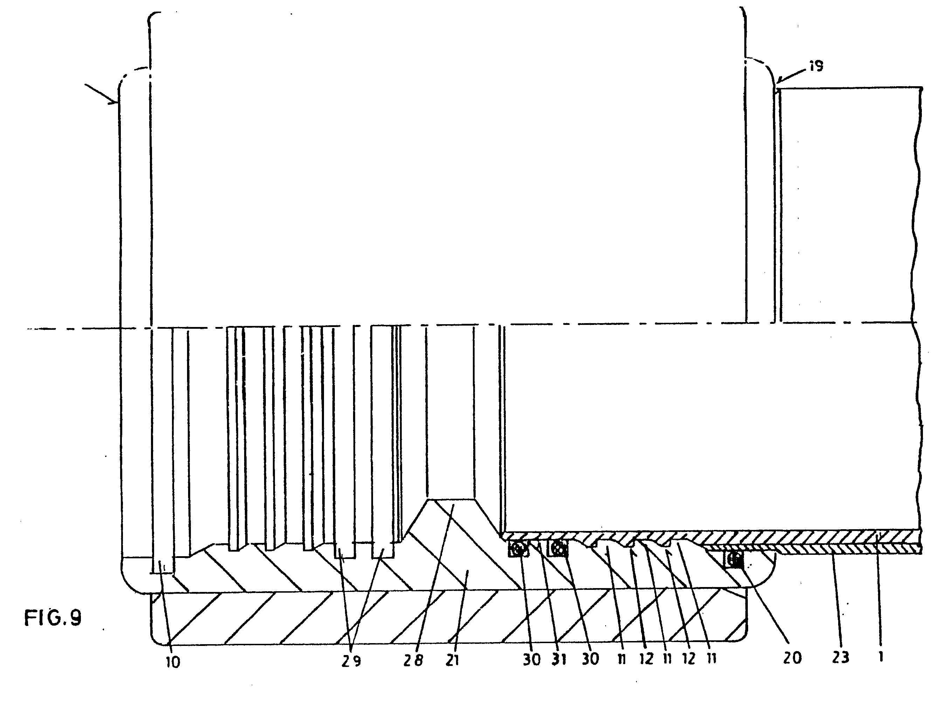

Dieses Übergangsstück kann als Isoliertrennstelle-Kraftbegrenzer-Kombination ausgebildet werden. Ein Ausführungsbeispiel ist in Fig. 9 gezeigt: Der aus einem Isoliereigenschaften aufweisenden Kunststoff hergestellte Fitting 21 weist beidseits des Vorsprunges 28 zwei Muffen auf, welche lediglich drei Vorsprünge aufweisen. Neben dem Vorsprung 28 sind zwei Rillen 29 für die Aufnahme von Dichtringen 30 vorgesehen. Diese liegen an der zylindrischen Fläche des Rohres 1 an. Ein weiterer Dichtring 20 ist in einer Ausnehmung 10 neben der Stirnseite 19 des Fittings 21 vorgesehen. Dieser Dichtring 20 liegt an der Kunststoffummantelung 23 des Rohres 1 an, die an dieser Stelle durch spanabhebendes Abdrehen konzentrisch mit der Außenfläche des Rohres 1 verläuft.

Ist die in axialer Richtung wirkende Kraft, welche zu einem Sollbruch der Transportleitung innerhalb dieses Fittings führen soll höher als erwünscht, so kann man entweder einen von den drei Vorsprüngen fortfallen lassen und/oder zwischen diesen ringförmigen Vorsprüngen in der Muffe oder auf dem Rohr mit einer achsparallelen Komponente verlaufende Ausnehnumgen von der Tiefe der Rillen vorsehen, um diese ringförmigen Vorsprünge zu unterbrechen. — Ist hingegen die Haltekraft des Fittings 21 nicht groß genug, so muß man ihn in einer längeren Ausführung mit mehr Vorsprüngen 12 herstellen.

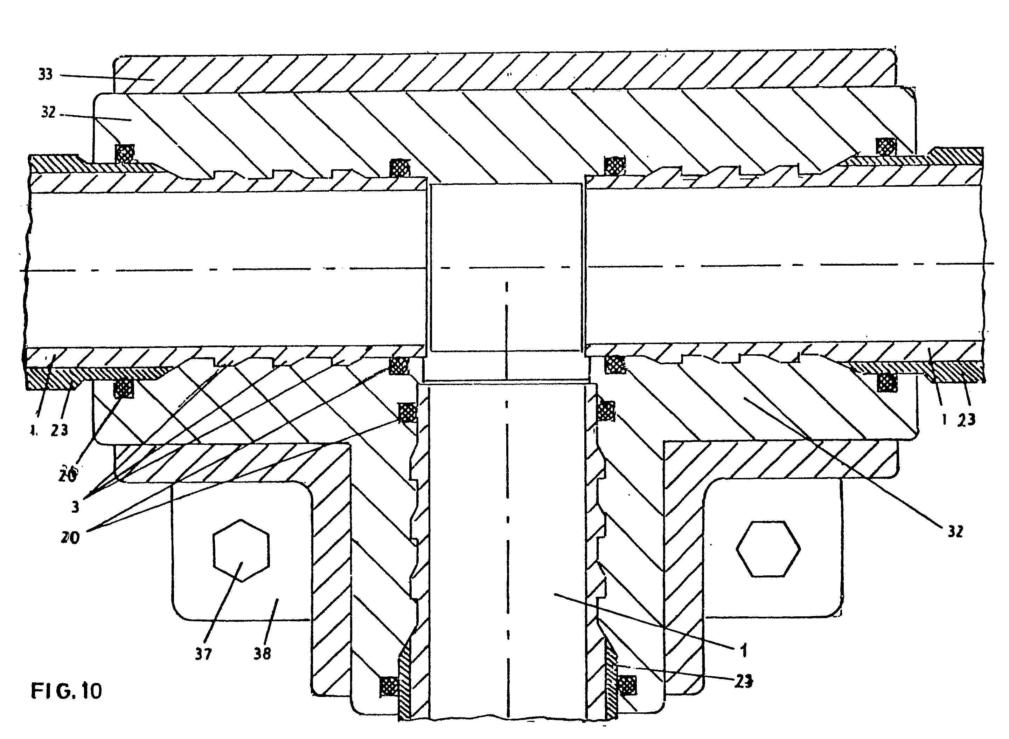

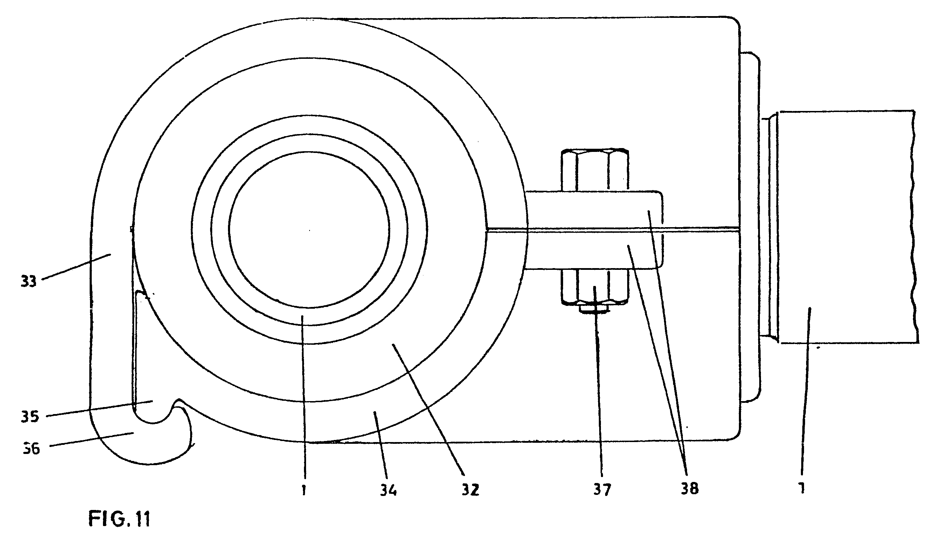

Das als Isoliertrennstelle-Kraftbegrenzer-Kombination hergestellte Übergangsstück kann aber auch andere Formen aufweisen. In Fig. 10 und 11 ist es als T-Abzweig gezeigt. Hier vereinigen sich in dem Fitting 32 drei Rohre 1. Dieser Fitting hat drei Muffen, welche durch Vorsprünge 28 voneinander getrennt sind, so daß die Rohre 1 nicht zu tief in den Fitting eingeschoben werden können. Die die Muffen umgebenden Ringe sind hier Teile einer aus zwei Teilschalen 33, 34 bestehenden Schale. Diese Schale wird auf der einen Seite durch zwei ineinandergreifende Haken 35, 36, auf der anderen Seite durch Schrauben 37 zusammengepreßt, die durch Laschen 38 hindurchgreifen, die an den Teilschalen 33, 34 befestigt sind. Diese Teilschalen sind zweckmäßigerweise aus korrosionsfestem Material hergestellt, beispielsweise Gußstücke aus Kunststoff. Sie können aber auch aus korrosionsfestem oder langzeitig korrosionsfest gemachtem Metall bestehen.

## Patentansprüche

1. Aus Rohren bestehendes Übergangsstück in einer Transportleitung für Gas oder Flüssigkeiten, deren eines Rohr mit einer Muffe versehen ist, die über das Ende des anderen Rohres geschoben ist, welches an seinem Ende mit Vorsprüngen und zwischen diesen befindlichen Rillen versehen ist und die einen von außen übergeschobenen Ring trägt, dadurch gekennzeichnet,

daß die Vorsprünge (3) auf dem Rohrende eine dem Rohrende zugewandte konische Schrägfläche (4), eine zur Achse parallele Fläche (5) und daran anschließend eine senkrecht zur Achse verlaufende Fläche (6) aufweisen,

daß die Innenfläche der Muffe (8) komplementär mit Rillen (11) und zwischen diesen befindlichen Vorsprüngen (12) versehen ist,

daß diese Rillen (11) an der Muffe (8) die Außenkontur der Vorsprünge (3) am Rohrende und die Vorsprünge (12) in der Muffe die Kontur der Rillen (2) im Metallrohrende aufweisen,

daß vor dem Einschieben des Rohrendes in die Muffe (8) der Außendurchmesser des Endes des Rohres (1) geringfügig größer als der Innendurchmesser der Muffe (8) ist und

daß vor dem Einschieben des Rohrendes in die Muffe (8) der zumindest an seinem einen inneren Ende mit einer Abschrägung (17) oder Abrundung versehene Ring (18) einen Innendurchmesser aufweist, der geringfügig kleiner als der Außendurchmesser der Muffe (8) ist.

2. Übergangsstück nach Anspruch 1, dadurch gekennzeichnet, daß in der Muffe (8) an deren der Muffenstirnseite (19) abgewandten Ende eine Ausnehmung (10) für die Aufnahme eines Dichtringes (20) vorgesehen ist, und daß am Ende des eingeschobenen Rohres (1) eine zylindrische Fläche (7) für die Anlage des Dichtringes (20) vorgesehen ist.

3. Übergangsstück nach Anspruch 1, dadurch gekennzeichnet, daß in der Muffe zwischen den Rillen (11) und den Vorsprüngen (12) einerseits und der Stirnseite (19) der Muffe andererseits eine Ausnehmung für die Aufnahme eines Dichtringes vorgesehen ist.

4. Übergangsstück nach Anspruch 1, dadurch gekennzeichnet, daß auf dem Rohr (1) (von der Stirnseite aus betrachtet) hinter den Rillen (2) und Vorsprüngen (3) eine Ausnehmung für die Aufnahme eines Dichtringes vorgesehen ist, und daß in der Muffe (8) zwischen den Rillen (11) und Vorsprüngen (12) einerseits und der Stirnseite (19) der Muffe (8) andererseits eine zylindrische oder konische Fläche (22) für die Anlage eines Dichtringes vorgesehen ist.

5. Übergangsstück nach Anspruch 1, dadurch gekennzeichnet, daß das mit der Muffe (8) versehene Rohr mindestens eine weitere Muffe (8) aufweist, in welche ein weiteres Rohr (1) eingeschoben ist, welches ebenfalls auf der Außenseite Vorsprünge (3) und Rillen (2) aufweist, daß zwischen den Muffen (8) ein nach innen gerichteter Vorsprung (28) befindlich ist, daß das mit den Muffen (8) versehene Rohr (21) aus einem elektrisch isolierenden Material besteht, und daß die an der Außenseite mit Vorsprüngen (3) versehenen Rohre aus Metall bestehen.

6. Übergangsstück nach Anspruch 1 und 5, dadurch gekennzeichnet, daß die ringförmigen Vorsprünge durch achsparallel verlaufende Ausnehmungen von der Tiefe der Rillen unterbrochen sind.

7. Übergangsstück nach Anspruch 1 und 5, dadurch gekennzeichnet, daß jeder, eine Muffe (8) umgebende Ring geteilt ist und zusammen mit anderen Ringen Teil einer anpreßbaren, mindestens zweiteiligen Schale (33, 34) ist.

8. Übergangsstück nach Anspruch 7, dadurch gekennzeichnet, daß die Schale (33, 34) mittels Schrauben (37) zusammengepreßt ist.

## Claims

1. A transition element consisting of tubes in a transport line for gas or liquids, one tube of which is provided with a sleeve which is slid over the end of the other tube, which is provided at its end with projections and grooves located therebetween and which carries a ring slipped over from the outside, characterised in

that the projections (3) on the end of the tube have a conical sloping surface (4) turned towards the tube end, a surface (5) parallel to the axis and joined thereto a surface (6) running perpendicular to the axis,

that the inner surface of the sleeve (8) is provided in a complementary manner with grooves (11) and ring-shaped projections (12) located therebetween,

that these grooves (11) at the sleeve (8) exhibit the outer contour of the projections (3) at the tube end, and the projections (12) in the sleeve (8) exhibit the contour of grooves on the metal tube end,

that before the tube end is slid into the sleeve (8), the outer diameter of the end of the tube (1) is slightly greater than the inner diameter of the sleeve (8), and

that before the tube end is slid into the sleeve (8), the ring (18) provided at at least one inner end with a bevelling (17) or rounding off, has an internal diameter which is slightly smaller than the outer diameter of the sleeve (8).

2. A transition element according to Claim 1, characterised in that in the sleeve (8) at its end remote from the front of the sleeve, a recess (10) is provided to receive a sealing ring (20), and that at the end of the inserted tube (1) a cylindrical surface (7) is provided for the bearing surface of the sealing ring (20).

3. A transition element according to Claim 1, characterised in that in the sleeve between the grooves (11) and the projections (12), on the one hand, and the front (19) of the sleeve, on the other hand, a recess to receive a sealing ring is provided.

4. A transition element according to Claim 1, characterised in that on the tube (1) (viewed from the front end) behind the grooves (2) and projections (3), a recess is provided to receive a sealing ring, and that the sleeve (8) between the grooves (11) and projections (12), on the one hand, and the front (19) of the sleeve, on the other hand, a cylindrical or conical surface (22) is provided for the bearing surface of a sealing ring.

5. A transition element according to Claim 1, characterised in that the tube provided with the sleeve (8) has at least one further sleeve (8) into which a further tube (1) is inserted, which likewise has projections (3) and grooves (2) on the outer side, that between the sleeves (8) an internally projection (28) is located, that the tube (21) provided with the sleeves (8) consists of an electrically insulating material, and that the tube provided on the outer side with projections (3) consists of metal.

6. A transition element according to Claims 1 and 5, characterised in that the annular projections are interrupted by openings of the depth of the grooves, running parallel to the axis.

7. A transition element according to Claims 1 and 5, characterised in that each ring surrounding a sleeve is divided and together with other rings, is part of an at least two-part shell (33, 34) which can be pressed on.

8. A transition element according to Claim 7, characterised in that the shell (33, 34) is pressed together by means of screw-bolts (37).

**Revendications**

1. Raccord se composant de tubes dans une conduite de transport de gaz ou de liquides, dont un tube est pourvu d'un manchon qui est engagé sur l'extrémité de l'autre tube, qui est pourvu à son extrémité de saillies ainsi que de rainures situées entre elles, et qui porte un anneau emmanché de l'extérieur, caractérisé en ce que les saillies (3) comportent à l'extrémité du tube une surface inclinée conique (4) dirigée vers l'extrémité de tube, une surface (5) parallèle à l'axe et, à la suite de celle-ci, une surface (5) orientée perpendiculairement à l'axe, en ce que la surface intérieure du manchon (8) est pourvue complémentairement de rainures (11) et de saillies de forme annulaire (12) situées entre celles-ci, en ce que lesdites rainures (11) prévues sur le manchon (8) ont le contour extérieur des saillies (3) prévues à l'extrémité du tube tandis que les saillies (12) prévues dans le manchon ont le contour des rainures (12) prévues à l'extrémité du tube métallique, en ce que, avant l'engagement de l'extrémité de tube dans le manchon (8), le diamètre extérieur de l'extrémité du tube (1) est légèrement plus grand que le diamètre intérieur du manchon (8), et en ce que, avant l'engagement de l'extrémité de tube dans le manchon (8), l'anneau (18) pourvu, au moins à l'une de ses extrémités intérieures, d'un biseau (17) ou d'un arrondi a un diamètre intérieur qui est légèrement plus petit que le diamètre extérieur du manchon (8).

2. Raccord selon la revendication 1, caractérisé en ce qu'il est prévu dans le manchon (8), à son extrémité opposée au côté frontal (19) du manchon, un évidement (10) pour recevoir une bague d'étanchéité (20), et en ce qu'il est prévu à l'extrémité du tube emmanché (11) une surface cylindrique (7) pour l'application de la bague d'étanchéité (20).

3. Raccord selon la revendication 1, caractérisé en ce qu'il est prévu dans le manchon, entre les rainures (11) et les saillies (12) d'une part, et le côté frontal (19) du manchon d'autre part, un évidement pour recevoir une bague d'étanchéité.

4. Raccord selon la revendication 1, caractérisé en ce qu'il est prévu sur le tube (1) (en regardant vers l'extérieur à partie de son côté frontal) en arrière des rainures (2) et des saillies (3) un évidement pour recevoir une bague d'étanchéité et en ce qu'il est prévu dans le manchon (8), entre les rainures (11) et les saillies (12) d'une part, et le côté frontal (19) du manchon (8) d'autre part, une surface cylindrique ou conique (22) pour l'application d'une bague d'étanchéité.

5. Raccord selon la revendication 1, caractérisé en ce que le tube pourvu du manchon (8) comporte au moins un autre manchon (8) dans lequel est engagé un autre tube (1), qui comporte également sur le côté extérieur des saillies (3) et des rainures (2), en ce qu'il est prévu entre les manchons (8) une saillie (28) dirigée vers l'intérieur, en ce que le tube (21) pourvu des manchons (8) se compose d'un matériau électriquement isolant, et en ce que les tubes pourvus de saillies (3) sur le côté extérieur se composent d'un métal.

6. Raccord selon les revendications 1 et 5, caractérisé en ce que les saillies de forme annulaire sont interrompues par des évidements orientés parallèlement à l'axe et ayant la profondeur des rainures.

7. Raccord selon les revendications 1 et 5, caractérisé en ce que chaque anneau entourant un manchon (8) est divisé et, en coopération avec d'autres anneaux, fait partie d'une coquille (33, 34) au moins en deux parties et pouvant être comprimée.

8. Raccord selon la revendication 7, caractérisé en ce que la coquille (33, 34) est comprimée à l'aide de vis (37).

6

FIG.1    FIG.2    FIG.3

EP 0 223 942 B1

FIG. 7

FIG. 4

FIG. 6

EP 0 223 942 B1

FIG.5

EP 0 223 942 B1

FIG. 8

FIG.9

FIG.10

FIG. 11

EP 0 223 942 B1